# EUROPÄISCHE PATENTSCHRIFT

(11) **EP 0 527 999 B1**
(45) Veröffentlichungstag und Bekanntmachung des Hinweises auf die Patenterteilung: **28.06.1995**
(21) Anmeldenummer: 92906004.4
(22) Anmeldetag: 11.03.1992
(51) Int. Cl.: F16B 25/00

(54) **SCHRAUBE ZUM EINDREHEN IN SACKLÖCHER GERINGER TIEFE**
SCREW FOR SHALLOW BLIND HOLES
VIS POUR TROUS BORGNES DE FAIBLE PROFONDEUR

(30) Priorität: 14.03.1991 DE 4108332
(43) Veröffentlichungstag der Anmeldung: 24.02.1993
(73) Patentinhaber: SFS Industrie Holding AG, 9435 Heerbrugg (CH)
(72) Erfinder: BÖGEL, Gerhard, CH-9436 Balgach (CH)
(74) Vertreter: Ludescher, Hans
(86) Internationale Anmeldenummer: EP9200530
(87) Internationale Veröffentlichungsnummer: WO9216760

(56) Entgegenhaltungen:
- BE-A- 499 980
- FR-A- 2 296 119
- US-A- 1 963 542
- US-A- 3 221 588
- US-A- 3 648 560

## Beschreibung

Die Erfindung betrifft eine Schraube der im Oberbegriff des patentanspruchs 1 angegebenen Art.

Es ist eine Vielzahl von Schrauben mit selbstschneidendem Gewinde bekannt geworden, welche in vorgebohrte Löcher eingedreht werden können. Selbstschneidende Schrauben werden in der Regel in Durchgangsbohrungen eines Bauteils eingesetzt, so dass der üblicherweise konisch zulaufende Endbereich des Schraubenschaftes in bezug auf die Ausreisswerte keinerlei Auswirkungen hat. Ein Problem stellt sich bei Schrauben mit selbstschneidendem Gewinde aber immer dann, wenn diese in Sacklöcher eingedreht werden sollen, da für das durch den Gewindeschneidvorgang abgearbeitete Material ein entsprechend tiefes Sackloch benötigt wird, um im freibleibenden Raum das abgearbeitete Material aufnehmen zu können, oder aber es ergeben sich Probleme hinsichtlich der Ausreissfestigkeit, wenn sich dieses abgearbeitete Material zwischen der Wandung des Sackloches und dem Schraubenschaft befindet. Es ist deshalb üblich, bei einer verdeckten, unsichtbaren Befestigung stets vorher in das Sackloch einen Dübel oder einen Gewindeeinsatz einzuführen, in welchen dann die Schraube eingedreht wird. Dabei ergeben sich aber auch Probleme, wenn relativ dünne Platten, welche schon aus ästhetischen Gründen nicht mit Durchgangsbohrungen versehen werden dürfen, mittels Sacklöchern befestigt werden sollen, da die vorgeschriebenen Ausreisswerte nämlich trotzdem erzielt werden müssen.

Eine Schraube der im Oberbegriff des Patentanspruchs 1 angegebenen Art ist aus der FR-A-22 96 119 bekannt. Bei dieser bekannten Schraube mit einem selbstschneidenden Gewinde ist eine erste Ausführung vorgesehen, bei der der Schraubenschaft über die ganze Länge zylindrisch ausgeführt ist. Dabei ist aber der erste, die Nut kreuzende Gewindegang an der in Eindrehrichtung der Schraube vorne liegenden Begrenzungskante vorgesehen. Bei einer zweiten Ausführung dieser bekannten Schraube geht der erste, die Nut kreuzende Gewindegang wohl von der in Eindrehrichtung der Schraube hinten liegenden Begrenzungskante der Nut aus, der Gewindequerschnitt wird jedoch von Gewindegang zu Gewindegang grösser. Gerade bei der ersten Ausführung ist aber vorgesehen, dass der erste, die Nut kreuzende Gewindegang von der Eindrehrichtung der Schraube vorne liegenden Begrenzungskante der Nut ausgeht und praktisch auch mit dem Ende des Schraubenschaftes ausläuft. Es ist praktisch unmöglich, eine solche Schraube mit selbstschneidendem Gewinde in eine passende Bohrung zentriert einzuführen, also ohne dass die Schraube verkantet wird. Daher besteht die Gefahr, dass das Gewinde oder die Bohrungswand beschädigt wird, so dass ein ordnungsgemässer Sitz der Schraube nicht mehr gewährleistet ist.

Aufgabe der Erfindung ist es, eine Schraube der im Oberbegriff des Patentanspruchs 1 angegebenen Art so zu verbessern, dass sie zentrierend in eine Bohrung einführbar ist, einwandfrei ein Gewinde schneiden kann und in Sacklöchern geringer Tiefe die erforderlichen Ausreisswerte ergibt.

Diese Aufgabe ist erfindungsgemäss durch die im Patentanspruch 1 angegebenen Merkmale gelöst.

Durch die Kombination dieser Merkmale wird erreicht, dass bei der Schraube nach der Erfindung der Schneidvorgang für das Gewinde gleich mit dem vollen Gewindequerschnitt begonnen wird, dass ein kleiner Bereich des Schraubenschaftes zur Verfügung steht, mittels welchem die Schraube zentriert in ein Sackloch eingeführt werden kann, bevor der erste Gewindegang greift, was ermöglicht, den Kerndurchmesser der Schraube dem Sacklochdurchmesser anzupassen, und dass sich ausserdem der Schraubenschaft über seiner gesamten Länge an der Sacklochwandung abstützt. Das bietet den weiteren Vorteil, dass mit der Schraube nach der Erfindung die erforderlichen Ausreisswerte auch dann erzielt werden, wenn sie einen Schraubenschaft hat, der für den Einsatz in Sacklöchern geringer Tiefe in dünnen Platten erforderlich ist. Für eine optimale Passung der Schraube nach der Erfindung in einem Sackloch und somit für eine wesentliche Verbesserung der Ausreisswerte sorgt in diesem Fall der zumindest über die gesamte mit einem Gewinde versehene Länge zylindrisch ausgeführte Schraubenschaft, da bereits mit einer geringen Gewindehöhe - die je nach Material der umgebenden Wandung erforderlich ist - eine ausreichende Ausreissicherheit gegeben ist.

Da ausreichend Raum für das abgearbeitete Material zur Verfügung steht, kann praktisch auch die gesamte Tiefe eines Sackloches ausgenützt werden, um dadurch auch die nötigen Ausreisswerte mit nur wenigen Gewindegängen erreichen zu können.

Da bei der Schraube nach der Erfindung die Nut speziell auf den Gewindegang abgestellt eingearbeitet ist, beginnt der Gewindeschneidvorgang im Bereich der in Eindrehrichtung der Schraube hinten liegenden Begrenzungskante der Nut, und es steht somit gleich die gesamte Gewindehöhe zur Verfügung, so dass mit diesem einen Schneidelement, welches vom Querschnitt eines Gewindeganges gebildet wird, bereits das fertige Gewinde geschnitten werden kann. Um eine ausreichende Oeffnung zur Aufnahme des beim Gewindeschneidvorgang abgearbeiteten Materials zu erreichen, beträgt der Querschnitt der Nut zweckmässig wenigstens 1/5 des Kernquerschnittes des Schraubenschaftes. Je nach Gewindehöhe kann so ein ausreichender Raum zur Aufnahme des abgearbeiteten Materials zur Verfügung gestellt werden.

Vorteilhafte Ausgestaltungen der Erfindung bilden die Gegenstände der Unteransprüche.

Da die Nut in bezug auf den Kernquerschnitt relativ gross ist, ist es allein schon aus Fertigungsgründen der Schraube zweckmässig, wenn die Nut im Querschnitt zylinder- oder prismaabschnittförmig ausgeführt ist.

Eine Variane für die Ausbildung der Nut liegt darin, dass das von dem freien Ende des Schraubenschaftes abgewandte Ende der Nut mit einem rechtwinklig zur Schraubenachse ausgerichteten Abschluss versehen ist. Es ist aber auch möglich, dass das von dem freien Ende des Schraubenschaftes abgewandte Ende der Nut bogenförmig in die Oberfläche des Schraubenschaftes ausläuft. Eine solche Konstruktion kann je nach dem Material, in welches die Schraube eingedreht werden soll, gewählt werden.

Gerade bei Befestigung mittels Schrauben in einem Sackloch kommt es darauf an, dass das Gewinde einwandfrei eingeschnitten wird, und dass bereits bei geringer Tiefe eines Sackloches ausreichende Ausreisswerte erzielt werden. Bei einer speziellen Ausführung der erfindungsgemässen Schraube wird daher vorgeschlagen, dass der Schraubenschaft mit vorzugsweise vier Gewindegängen versehen ist und sich die Nut über die ersten beiden Gewindegänge erstreckt.

Bei der erfindungsgemässen Ausbildung kann, da eine einwandfreie Einarbeitung des Gewindes gewährleistet ist, mit einem relativ steilen Gewinde gearbeitet werden, so dass auch die Eindrehzeit einer solchen Schraube wesentlich verringert wird. Es wird vorgeschlagen, dass die Gewindesteigung annähernd dem halben Kerndurchmesser des Schraubenschaftes entspricht.

Da sich bei der erfindungsgemässen Ausbildung einer Schraube der Kern des Schraubenschaftes satt an die Sacklochbohrung anlegen kann, bedarf es nur einer relativ geringen Gewindehöhe, um die notwendigen Ausreisswerte zu erzielen. Bei einer zweckmässigen Ausführung ist also vorgesehen, dass das Verhältnis von Kerndurchmesser 1:1,1 bis 1,3, vorzugsweise 1:1,2 beträgt.

In Anpassung an die grosse Gewindesteigung und die zweckmässige Ausbildung, dass die Nut über zwei Gewindegänge führt, wird vorgeschlagen, dass die axiale Länge der Nut annähernd dem Kerndurchmesser des Schraubenschaftes entspricht.

Um einen Bauteil ordnungsgemäss am einen, mit dem Sackloch ausgeführten Bauteil verbinden zu können, ist es vorteilhaft, wenn das Gewinde am Schraubenschaft nicht bis unmittelbar unter den Schraubenkopf geführt wird, sondern dass gerade im befestigenden Bauteil ein Abschnitt des Schraubenschaftes liegt, welcher kein Gewinde aufweist. Es ist daher zweckmässig, wenn zwischen dem mit einem Gewinde versehenen Abschnitt des Schraubenschaftes und dem Schraubenkopf ein gewindefreier Schaftabschnitt vorgesehen ist, dessen Durchmesser gleich dem oder grösser als der Gewindeaussendurchmesser ausgeführt ist. Es wird dadurch auch eine verschiebesichere, zentrierte Befestigung eines Bauteiles am mit einem Sackloch versehenen Bauteil gewährleistet.

Weitere Merkmale und besondere Vorteile der Erfindung werden in der nachstehenden Beschreibung anhand der Zeichnung noch näher erläutert. Es zeigen:
- Fig. 1: einen Schnitt durch eine Befestigung zweier Bauteile mit eingesetzter Schraube;
- Fig. 2: eine Ansicht der Schraube gemäß Fig. 1 von unten;
- Fig. 3: ein Einsatzbeispiel für eine erfindungsgemäße Schraube;
- Fig. 4: eine Seitenansicht einer Schraube mit einer anderen Kopfform;
- Fig. 5: diese Schraube in Ansicht von unten;
- Fig. 6: einen Schnitt durch die Schraube nach der Linie IV-IV in Fig. 4;
- Fig. 7: eine weitere Ausführungsform einer Schraube in Seitenansicht und
- Fig. 8: in einer Ansicht von unten;
- Fig. 9: ein weiteres Ausführungsbeispiel der Schraube in Seitenansicht und
- Fig. 10: diese Schraube in Ansicht von unten.

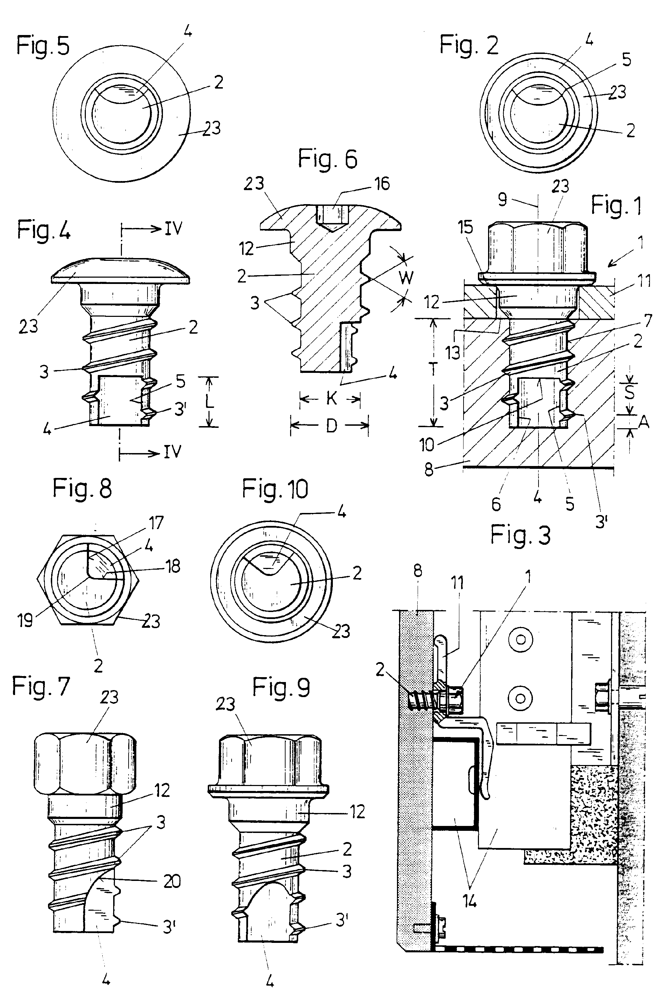

Die Schraube 1 besteht im wesentlichen aus dem Schraubenschaft 2 und dem Schraubenkopf 23. Der Schraubenschaft 2 ist mit einem selbstschneidenden Gewinde 3 versehen, welches vom freien Ende des Schraubenschaftes 2 ausgehend über wenigstens einen Teil der Länge desselben verläuft. Vom freien Ende des Schrauben-schaftes 2 ausgehend ist eine über den Bereich wenigstens einer Gewindesteigung S annähernd achsparallel verlaufende Nut 4 vorgesehen. Zumindest der erste, die Nut 4 kreuzende Gewindegang 3' geht von der in Eindrehrichtung der Schraube 1 hinten liegenden Begrenzungskante 5 aus. Bei einem Rechtsgewinde, wie es in den Zeichnungen dargestellt ist, ist dies also die jeweils dargestellte rechte Begrenzungskante der Nut 4. Bei einem Linksgewinde wäre dies natürlich die gegenüberliegende Begrenzungskante 6. Der Querschnitt der Nut 4 ist wenigstens 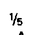 des Kernquerschnittes des Schraubenschaftes 2 entsprechend bemessen, wobei dieser Querschnitt bei der Ausführung nach den Fig. 1 bis 6 bis zu 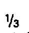 des Kernquerschnittes betragen kann. Es ist auf jeden Fall vorteilhaft, wenn der Öffnungsabschnitt der Nut 4 kleiner als 180° ist.

Der von der einen Begrenzungskante 5 der Nut 4 ausgehende, erste Gewindegang 3′ ist mit Abstand A vom Ende des Schraubenschaftes 2 ausgebildet. Es ergibt sich dadurch ein in axialer Richtung gesehen kleiner Abschnitt, der mit keinem Gewinde versehen ist.

Der Schraubenschaft 2 ist zumindest über die mit einem Gewinde 3 versehene Länge zylindrisch ausgeführt und kann somit passend in eine Sacklochbohrung 7 im Bauteil 8 eingedreht werden. Die Nut 4 ist bei der Ausführung nach den Fig. 1 bis 6 im Querschnitt zylinderabschnittförmig ausgeführt. Die Nut kann also in einem Fräs- oder auch in einem Preßvorgang hergestellt werden. Bei der Ausführung nach den Fig. 1 bis 6 ist das dem freien Ende des Schraubenschaftes 2 abgewandte Ende der Nut 4 mit einem rechtwinklig zur Schraubenachse 9 ausgerichteten Abschluß 10 versehen. Es verbleibt also ein relativ großer Bereich mit einem vollzylindrischen Querschnitt für den Schraubenschaft, um dadurch eine großflächige Passung im Sackloch 7 des Bauteiles 8 zu erzielen.

Es ist den Figuren zu entnehmen, daß bei einer speziellen Ausführungsform vorzugsweise vier Gewindegänge 3 vorgesehen sind, wobei sich die Nut 4 über die ersten zwei Gewindegänge erstreckt. Die Gewindesteigung S entspricht annähernd dem halben Kerndurchmesser K und dementsprechend entspricht die axiale Länge L der Nut 4 annähernd dem Kerndurchmesser K des Schraubenschaftes 2.

Durch die gute Passung des Schraubenschaftes 2 im Sackloch 7 ist es möglich, eine relativ kleine Gewindehöhe vorzusehen. So wird ein Verhältnis von Kerndurchmesser zu Außendurchmesser von 1 : 1,1 bis 1,3, vorzugsweise 1 : 1,2 vorgeschlagen. Der Außendurchmesser D entspricht also zweckmäßigerweise dem 1,2-fachen Kerndurchmesser K.

Um ein gutes Eindringen der Gewindegänge in die Wandung des Sackloches 7 zu erreichen, ist die zweckmäßige Ausbildung des Gewindes 3 so vorgesehen, daß die beiden Gewindeflanken einen Winkel W von annähernd 60° miteinander einschliessen.

Zur Zentrierung des am Bauteil 8 zu befestigenden Bauteiles 11 ist vorgesehen, daß zwischen dem mit einem Gewinde 3 versehenen Abschnitt des Schraubenschaftes 2 und dem Schraubenkopf 23 ein gewindefreier Schaftabschnitt 12 vorhanden ist, dessen Durchmesser gleich oder größer als der Gewindeaußendurchmesser D ausgeführt ist.

In Fig. 3 ist ein Einsatzbeispiel für eine Schraube gezeigt. Im einen Bauteil ist ein Sackloch vorgesehen, dessen Durchmesser dem Kerndurchmesser K der Schraube 1 und dessen Tiefe der Länge des mit einem Gewinde 3 besetzten Schaftabschnittes 2 der Schraube 1 entspricht. Der am einen Bauteil 8 zu befestigende Bauteil 11 weist eine Durchgangsbohrung 13 auf, deren Durchmesser gleich oder größer als der Gewindeaußendurchmesser D bzw. der Durchmesser des unterhalb des Schraubenkopfes 23 vorgesehenen, gewindefreien Bundes 12 ausgebildet ist. Bei der gezeigten Ausführung wird jeweils ein Bauteil 11 am anderen Bauteil 8 befestigt. Es ist natürlich auch möglich, mehrere übereinander geschichtete Bauteile 11 am Bauteil 8 zu befestigen.

Beim Ausführungsbeispiel nach Fig. 3 geht es um die Befestigung einer massiven Fassadenplatte auf der Basis thermohärtender Kunstharze, homogen verstärkt mit Cellulose-Fasern. Mit solchen Platten werden Fassaden-Verkleidungen, Attika-Verkleidungen, Dachuntersicht-Verkleidungen, Brückengeländer-Füllungen und -Verkleidungen, Treppengeländer-Füllungen und -Verkleidungen, Verkleidungs- und Füllelemente von Bushaltestellen oder Wartehäuschen sowie für Werbeträger hergestellt. Bei diesen Anwendungen wird neben der sichtbaren Befestigung auch eine verdeckte, unsichtbare Befestigung an der Plattenrückseite verlangt. Die Plattendicken variieren je nach Anwendung zwischen 10 und 13 mm. Die Sacklochtiefen werden dementsprechend mit 7 bzw. 10 mm gewählt. Mittels eines rostfreien Befestigers soll nun eine Agraffe (Bauteil 11) an der Platte (Bauteil 8) befestigt werden, die dann an der z.B. aus Aluminium bestehenden Unterkonstruktion 14 eingehängt wird.

Bei der Ausführung nach den Fig. 1 und 2 ist der Schraubenkopf mit einem Sechskant-Schlüsselangriff versehen, und es ist ein zusätzlicher Flansch 15 ausgebildet. Die Ausführung nach den Fig. 4 bis 6 unterscheidet sich von der Ausbildung nach den Fig. 1 und 2 lediglich durch die besondere Kopfform. Es ist hier ein Schraubenkopf 23 mit relativ flacher Ausführung vorgesehen, wobei als Antrieb ein Innensechskant 16 oder ein anderer Schlüsselangriff vorgesehen wird.

Bei der Ausführung nach den Fig. 7 und 8 sowie nach den Fig. 9 und 10 ist die Nut 4 von jeweils zwei beispielsweise einen rechten Winkel miteinander einschliessenden Begrenzungsflächen 17, 18 eingeschlossen. Am Nutgrund 19 ist ein bogenförmiger Übergang vorgesehen. Auch bei einer solchen Ausführung könnte das dem freien Ende des Schraubenschaftes 2 abgewandte Ende der Nut 4 mit einem rechtwinklig zur Schraubenachse ausgerichteten Abschluß versehen sein. Es ist jedoch bei dieser Ausführung vorgesehen, daß dieses Ende der Nut 4 in einem Bogen 20 in die Oberfläche des Schraubenschaftes 2 ausläuft. Bei einer solchen Ausbildung ist die Herstellung mittels eines in Achsrichtung der Schraube heranführbaren Fräsers möglich und natürlich auch durch einen Preß- oder einen anderen Umformvorgang.

In der obigen Beschreibung ist ein Ausführungsbeispiel anhand des Einsatzes bei Fassadenplatten beschrieben. Die erfindungsgemäße Schraube ist natürlich überall dort einsetzbar, wo eine Befestigung eines Bauteiles in einem Sackloch erfolgen soll. Überall dort ergeben sich dann Vorteile bezüglich der raschen Befestigung durch gleichzeitiges Herstellen eines Gewindes und durch die Erzielung hoher Ausreißwerte. Je nach Einsatzbereich können dabei gehärtete Schrauben oder aber auch rostfreie Schrauben aus Edelstahl eingesetzt werden. Je nach Material an der Wandung des Sackloches können unter Umständen auch die Gewindeform, der Öffnungswinkel der Nut 4 und die Gewindesteigung entsprechend geändert werden. Es muß aber immer ein auf das Material abgestimmtes Gewinde vorgesehen werden, wobei der Gewindeeinlauf, also der Gewindeanfang, in einer genauen Lage zur Nut 4 sein muß. Die Nut 4 wird also an der exakt notwendigen Stelle am Umfangsbereich des Schraubenschaftes ausgebildet, so daß die notwendige Gewindeschneidfunktion gewährleistet und der Raum für anfallende Späne an der richtigen Stelle vorhanden ist.

Die erfindungsgemäßen Schrauben könnten beispielsweise auch bei dicken Stahlträgern zum Einsatz kommen, z.B. bei der Pfettenbefestigung auf Stahlträger, bei der Kassettenbefestigung auf Stahlträger usw. In der Regel wird bisher bei solchen Anwendungen eine Direktbefestigung mittels Schußapparat vorgenommen. Die andere Lösung liegt darin, daß eine Durchgangsbohrung hergestellt wird, wobei dann die Befestigung mittels Schraube und Mutter erfolgt. Beim Einsatz einer erfindungsgemässen Schraube müßte nur ein Sackloch von ca. 10 mm Tiefe gebohrt werden. Es könnte dann der Befestiger direkt in den Stahlträger eingedreht werden.

## Patentansprüche

1. Schraube mit einem selbstschneidenden Gewinde zum Eindrehen in Sacklöcher geringer Tiefe, wobei vom freien Ende des Schraubenschaftes ausgehend das Gewinde über wenigstens einen Teil der Länge desselben verläuft, der Schraubenschaft (2) zumindest über die gesamte mit einem Gewinde versehene Länge zylindrisch ausgeführt ist und eine Nut über den Bereich wenigstens einer Gewindesteigung vorgesehen ist, dadurch gekennzeichnet, dass der Grund (19) der Nut (4) zumindest teilweise annähernd achsparallel zum Schraubenschaft (2) verläuft, dass zumindest der erste, die Nut (4) kreuzende Gewindegang (3′) von der in Eindrehrichtung der Schraube (1) hinten liegenden Begrenzungskante (5) der Nut (4) ausgeht und mit vollem Gewindequerschnitt beginnt und dass der von dieser Begrenzungskante (5) der Nut (4) ausgehende erste Gewindegang (3) mit Abstand (A) vom Ende des Schraubenschaftes (2) beginnt.

2. Schraube nach Anspruch 1, dadurch gekennzeichnet, dass die Nut (4) im Querschnitt zylinder- oder prismaabschnittförmig ausgeführt ist.

3. Schraube nach den Ansprüchen 1 oder 2, dadurch gekennzeichnet, dass das von dem freien Ende des Schraubenschaftes (2) abgewandte Ende der Nut (4) mit einem rechtwinklig zur Schraubenachse (9) ausgerichteten Abschluss (10) versehen ist.

4. Schraube nach den Ansprüchen 1 oder 2, dadurch gekennzeichnet, dass das von dem freien Ende des Schraubenschaftes (2) abgewandte Ende der Nut (4) bogenförmig in die Oberfläche des Schraubenschaftes ausläuft.

5. Schraube nach Anspruch 1, dadurch gekennzeichnet, dass der Schraubenschaft (2) mit vorzugsweise vier Gewindegängen (3) versehen ist und sich die Nut (4) über die ersten beiden Gewindegänge (3) erstreckt.

6. Schraube nach einem der Ansprüche 1 bis 5, dadurch gekennzeichnet, dass die Gewindesteigung (S) annähernd dem halben Kerndurchmesser (K) des Schraubenschaftes (2) enspricht.

7. Schraube nach einem der Ansprüche 1 bis 6, dadurch gekennzeichnet, dass das Verhältnis von Kerndurchmesser (K) zu Aussendurchmesser (D) 1:1,1 bis 1,3 und vorzugsweise 1:1,2 beträgt.

8. Schraube nach einem der Ansprüche 1 bis 7, dadurch gekennzeichnet, dass die axiale Länge (L) der Nut (4) annähernd dem Kerndurchmesser (K) des Schraubenschaftes (2) entspricht.

9. Schraube nach einem der Ansprüche 1 bis 8, dadurch gekennzeichnet, dass zwischen dem mit einem Gewinde versehenen Abschnitt des Schraubenschaftes (2) und dem Schraubenkopf (23) ein gewindefreier Schaftabschnitt (12) vorgesehen ist, dessen Durchmesser gleich dem oder grösser als der Gewindeaussendurchmesser (D) ausgeführt ist.

## Claims

1. A screw with a self-tapping thread to be screwed into shallow blind holes, wherein starting from the free end of the screw shank the thread extends over at least a part of the length thereof, the screw shank (2) is formed cylindrically at least over the entire length provided with a thread and a groove is provided over the region of at least one thread pitch, characterised in that the base (19) of the groove (4) extends at least partly approximately axially parallel to the screw shank (2), in that at least the first thread (3) intersecting the groove (4) originates from the boundary edge (5) of the groove (4) situated rearwardly in the screwing-in direction of the screw (1) and begins with full thread cross-section, and in that the first thread (3) originating from this boundary edge (5) of the groove (4) begins at a distance (A) from the end of the screw shank (2).

2. A screw according to Claim 1, characterised in that the groove (4) is designed to be of cylindrical or prismatic segment-shaped cross-section.

3. A screw according to Claim 1 or 2, characterised in that the end of the groove (4) remote from the free end of the screw shank (2) is provided with a terminal portion (10) aligned at right-angles to the screw axis (9).

4. A screw according to Claim 1 or 2, characterised in that the end of the groove (4) remote from the free end of the screw shank (2) narrows arcuately into the surface of the screw shank.

5. A screw according to Claim 1, characterised in that the screw shank (2) is preferably provided with four threads (3) and the groove (4) extends across the first two threads (3).

6. A screw according to any one of Claims 1 to 5, characterised in that the thread pitch (S) corresponds approximately to half the core diameter (K) of the screw shank (2).

7. A screw according to any one of Claims 1 to 6, characterised in that the ratio of core diameter (K) to outer diameter (D) is 1:1.1 to 1.3 and, preferably, is 1:1.2.

8. A screw according to any one of Claims 1 to 7, characterised in that the axial length (L) of the groove (4) corresponds approximately to the core diameter (K) of the screw shank (2).

9. A screw according to any one of Claims 1 to 8, characterised in that between the portion of the screw shank (2) provided with a thread and the screw head (23) there is provided a threadless shank portion (12), the diameter of which is designed to be equal to or greater than the thread outside diameter (D).

## Revendications

1. Vis avec un filetage autotaraudeur que 'on peut enfoncer en tournant dans des trous borgnes de faible profondeur, vis dans le cas de laquelle en partant de l'extrémité libre de la tige de la vis le filetage s'étend sur au moins une partie de la longueur de celle-ci, la tige de la vis (2) est réalisée de façon cylindrique au moins sur toute la longueur pourvue d'un filetage et il est prévu une rainure sur la zone d'au moins l'un des pas de vis, vis caractérisée en ce que le fond (19) de la rainure (4) s'étend au moins en partie à peu près parallèlement à l'axe de la tige de la vis (2), en ce qu'au moins le premier pas de vis (3′) qui coupe la rainure (4) part de l'arête de délimitation (5) de la rainure (4) qui se trouve en arrière dans le sens d'enfoncement par rotation de la vis (1) et commence avec une section transversale complète de filetage et en ce que le premier pas de vis (3) partant de cette arête de délimitation (5) de la rainure (4) commence à une distance (A) de l'extrémité de la tige de filetage (2).

2. Vis selon la revendication 1, caractérisée en ce que la rainure (4) a en section transversale une forme cylindrique ou la forme d'une section de prisme.

3. Vis selon les revendications 1 ou 2, caractérisée en ce que l'extrémité de la rainure (4), située à l'opposé de l'extrémité libre de la tige de la vis (2) est pourvue d'une terminaison (10) orientée à angle droit par rapport à l'axe de la vis (9).

4. Vis selon les revendications 1 ou 2, caractérisée en ce que l'extrémité de la rainure (4) qui est située à l'opposé de l'extrémité libre de la tige de la vis (2) s'étend en forme d'arc à la surface de la tige de la vis.

5. Vis selon la revendication 1, caractérisée en ce que la tige de la vis (2) est pourvue de préférence de quatre pas de vis (3) et en ce que la rainure (4) s'étend sur les deux premiers pas de vis (3).

6. Vis selon l'une des revendications 1 à 5, caractérisée en ce que le pas de vis (S) correspond à peu près à la moitié du diamètre du noyau (K) de la tige de la vis (2).

7. Vis selon l'une des revendications 1 à 6, caractérisée en ce que le rapport entre le diamètre du noyau (K) et le diamètre extérieur (D) est compris entre 1 : 1,1 et 1,3 et atteint de préférence 1 : 1,2.

8. Vis selon l'une des revendications 1 à 7, caractérisée en ce que la longueur axiale (4) de la rainure (4) correspond à peu près au diamètre du noyau (K) de la tige de la vis (2).

9. Vis selon l'une des revendications 1 à 8, caractérisée en ce qu'entre la section, pourvue d'un filetage, de la tige de la vis (2) et la tête de la vis (23), il est prévu une section de tige (12) sans filetage, section dont le diamètre est égal au diamètre du filetage (D) ou plus grand que celui-ci.
